# EUROPÄISCHE PATENTSCHRIFT

(11) **EP 1 580 049 B1**
(45) Veröffentlichungstag und Bekanntmachung des Hinweises auf die Patenterteilung: **11.06.2008**
(21) Anmeldenummer: 05005838.7
(22) Anmeldetag: 17.03.2005
(51) Int. Cl.: B60H 1/00, F24F 13/14

(54) **Regelklappe für ein Lüftungssystem eines Kraftfahrzeugs**
Damper door for a vehicle ventilating system
Volet de régulation pour un système d'aération d'un véhicule

(30) Priorität: 25.03.2004 US 809282
(43) Veröffentlichungstag der Anmeldung: 28.09.2005
(73) Patentinhaber: Behr GmbH & Co. KG, 70469 Stuttgart (DE)
(72) Erfinder: Burr, Reinhold, Dipl.-Ing., 89522 Heidenheim (DE); Fritsch, Uwe, MI-48085 Troy (US)
(74) Vertreter: Grauel, Andreas

(56) Entgegenhaltungen:
- EP-A- 0 690 272
- DE-A1- 10 018 268
- DE-A1- 10 029 097
- DE-A1- 19 717 335
- US-B1- 6 484 755

## Beschreibung

Die vorliegende Erfindung betrifft eine Regelklappe für ein Lüftungssystem eines Kraftfahrzeugs.

Solche Regelklappen für ein Lüftungssystem eines Kraftfahrzeugs sind im Stand der Technik bekannt. Diese Regelklappen werden beispielsweise in Lüftungskanälen verwendet, um den Volumenstrom zu verändem oder aber auch um bei einer Vielzahl von Strömungswegen den Luftstrom in eine vor gegebene Richtung zu lenken. Femer dienen solche Regelklappen auch dazu, vorgegebene Strömungswege für z.B. Luft zu öffnen oder zu schließen, wobei hierdurch, wie für Lüftungssysteme in Kraftfahrzeugen bekannt, die Luftströme beispielsweise in den Fußbereich der Insassen oder an die Innenseite der Frontscheibe gelenkt werden. Auch können durch die Auswahl des Strömungsweg bestimmte Baugruppen des Lüftungssystems zugeschaltet werden.

DE 100 18 268 A1 zeigt eine Regelklappe gemäß dem Oberbegriff des Anspruchs 1.

Die im Stand der Technik bekannten Klappen weisen unter anderem Geräuschprobleme, beispielsweise hochfrequentes Rauschen und/oder Pfeifen, auf. Diese Geräuschprobleme treten insbesondere bei kleinen Klappenöffnungswinkeln der Regelklappe auf und werden von den Fahrzeuginsassen als störend empfunden.

Im Stand der Technik werden ferner auch verschiedene Varianten von flexiblen Dichtungen für Regelklappen verwendet, bei denen je nach Anwendungsfall Insbesondere in Wechselwirkung mit der Gehäusegeometrie ein Geräuschproblem auftreten kann.

Ursache für derartige Geräuschprobleme sind beispielsweise hohe Luftgeschwindigkeiten an den Dichtflächen, wobei in Abhängigkeit der Dichtelstengeometrie lokal Luftströmungsgeschwindigkeiten auftreten, welche über Wechselwirkungen zwischen dem Luftstrom und der Dichtkante einer Klappe zu einem Pfeifton und/oder zu einem höherfrequenten Rauschen führen können. Es ist bekannt, dass dieses Problem sowohl bei weichen kunststoffumspritzten Klappen, als auch bei harten Dichtkanten von Klappen auftreten kann.

Aufgabe der vorliegenden Erfindung ist es, die im Stand der bekannten Probleme zu vermeiden beziehungsweise zu reduzieren und eine verbesserte Regelklappe für Lüftungssysteme, insbesondere in Kraftfahrzeugen, bereit zu stellen.

Die Aufgabe wird durch eine erfindungsgemäße Regelklappe für ein Lüftungssystem eines Kraftfahrzeuges gemäß Anspruch 1 und durch ein Verfahren zur Reduzierung von Strömungsgeräuschen eines Lüftungssystems gemäß Anspruch 13 gelöst. Bevorzugte Ausgestaltungen der Erfindung sind Gegenstand der Unteransprüche.

Die erfindungsgemäße Klappe für ein Lüftungssystem eines Kraftfahrzeuges weist wenigstens eine von Luft umströmte Kante auf, weiche wenigstens von einer ersten Position in eine zweite Position bewegbar ist. Die erfindungsgemäße Regelklappe ist dadurch gekennzeichnet, dass die im wesentlichen flächig ausgeführte Klappe, insbesondere im Bereich der luftumströmten Kante, ein sich änderndes Querschnittsprofil aufweist, welches wenigstens einen Teilbereich der vorbeiströmenden Luft, in eine Vielzahl von der Hauptströmungsrichtung des Luftstromes abweichende Strömungsrichtungen ablenkt.

Als Hauptströmungsrichtung wird gemäß der vorliegenden Erfindung die Richtung des Hauptluftstromes bezeichnet, bei welchem eine Vielzahl von Strömungsteilchen im wesentlichen einem vorgegebenen Strömungspfad folgen. Die Hauptstr6mungsrichtung kann insbesondere in einem Teilbereich eine laminare Strömung aufweisen, die jedoch insbesondere auch in den Randbereichen, d.h. in den Grenzschichten, turbulente Bereiche aufweisen kann.

Der Begriff "flächig ausgeführte Klappe" soll gemäß der vorliegenden Erfindung in der Art verstanden werden, dass die Haupterstreckungsrichtung der Klappe zwei Dimensionen aufweist, wobei nicht ausgeschlossen ist, dass die Klappe eine unterschiedliche Querschnittsstärke aufweist. Insbesondere kann die Klappe so gestaltet werden, dass sie beispielsweise von der Rotationsachse aus einen sich verjüngenden Querschnitt aufweist. Dies kann sowohl eine stetige als auch sprungförmige Änderung sein.

Als Lüftungssystem werden gemäß der vorliegenden Erfindung insbesondere Strömungskanäle und darin befindliche Baugruppen verstanden, die beispielsweise Frischluft von Außen in den Innenraum eines Kraftfahrzeuges führen und/oder Abluft aus einem Innenbereich eines Kraftfahrzeuges nach außen abführen. Solche Lüftungssysteme sind beispielsweise Lüftungsanlagen mit Wärmetauscher, Klimaanlagen, Standheizungen und dergleichen für Kraftfahrzeuge, wie sie im Stand der Technik bekannt sind.

Die erfindungsgemäße Regelklappe weist gemäß einer bevorzugten Ausführungsform im überströmten Kantenbereich Querschnittsüberhöhungen auf, welche beispielsweise Querschnittsvariationen sein können, welche gleichmäßig oder ungleichmäßig über die Kantenlänge verteilt angeordnet sind.

Solche Querschnittsüberhöhungen können gemäß einer weiteren bevorzugten Ausführungsform dadurch hergestellt werden, dass die Kanten der Regelklappe in einem vorgegebenen Bereich beispielsweise mit einem Kunststoff überspritzt werden, und die Dicke der Kunststoffschicht variiert wird. Femer können in der Regelklappe Ausnehmungen vorgesehen sein, welche beispielsweise beim Übersprifzen mit einem Kunststoff zu der gewünschten Querschnittsüberhöhung oder dem Querschnittsprofil führt. Selbstverständlich liegt es auch im Sinn der vorliegenden Erfindungen die Querschnittsüberhöhungen auch durch andere im Stand der Technik bekannte Verfahren herzustellen. Insbesondere liegt es unter anderem auch im Sinn der Erfindung, Strömungskörper (wie nachfolgend erörtert) zu verwenden und diese mit Kunststoff zu überspritzen.

Erfindungsgemäß weist die Regelklappe im überströmten Kantenbereich Strömungskörper auf. Die Strömungskörper selbst sind gemäß einer weiteren besonders bevorzugten Ausführungsform insbesondere sogenannte Turbulenzgeneratoren, welche beispielsweise aus einer Gruppe von Strukturen ausgewählt werden, welche Zinnen, Karlotten, Noppen, Pyramiden, Verzahnungen, Gitter, Gitterabschnitte, Zylinder, Kombinationen hieraus und dergleichen aufweisen.

Es liegt auch im Sinn der vorliegenden Erfindung, die Strömungskörper in einem vorgegebenen Winkel in bezug auf die von der Luft überströmte Kante der Regelungsklappe anzuordnen.

So kann beispielsweise solch ein Strömungskörper in bezug auf den Kantenbereich der Regelklappe einen Winkel zwischen 90° und 25°, vorzugsweise 60° bis 45° aufweisen.

Die Regelklappe ist gemäß einer weiteren besonders bevorzugten Ausführungsform ein integrales Spritz-Guss-Teil, dass gemäß einer weiteren besonders bevorzugten Ausführungsform Verstärkungsstege aufweist, die eine ausreichende Biegesteifigkeit der Regelklappe gewährleisten.

Gemäß einer weiteren besonders bevorzugten Ausführungsform sind auf einer vorgegebenen Drehachse mehrere Regelklappen nebeneinander angeordnet, wobei gemäß einer weiteren besonders bevorzugten Ausführungsform zwischen den einzelnen Regelklappen Ausnehmungen vorgesehen sind, die sich bevorzugt von wenigstens einer äußeren Kante mit einer vorgegebenen Länge in Richtung auf die Rotationsachse der Klappen erstrecken.

Die erfindungsgemäße Regelklappe weist in einer besonders bevorzugten Ausführungsform wenigstens eine Drehachse auf, an deren Endbereich wenigstens eine Kupplungsvorrichtung vorgesehen ist. Sie dient u.a. dazu, eine definierte Lagerung beziehungsweise einen definierten Antrieb der Klappe bereitzustellen.

So kann ein Antrieb über eine Antriebswelle direkt oder indirekt mit der Kupplungsvorrichtung verbunden werden, um beispielsweise die Regelklappe in eine Vielzahl von Positionen zu bewegen.

Es liegt selbstverständlich auch im Sinn der vorliegenden Erfindung die Regelklappe in den Endbereichen der Drehachse lediglich zu lagern und eine unabhängig hiervon angeordnete Stelleinrichtung, die beispielsweise direkt an der Klappe angreift, zu verwenden.

Die erfindungsgemäße Regelklappe weist ferner wenigstens eine Dichtkante auf, die gemäß einer weiteren besonders bevorzugten Ausführungsform als weiche oder harte Dichtkante ausgeführt ist. Solch eine Dichtkante dient dazu, in Wechselwirkung mit beispielsweise einem Lüftungskanal, in welchem die Regelklappe eingebaut ist, eine vorgegebene Abdichtung in der Schließposition der Regelklappe für den Luftstrom bereitzustellen.

Gemäß einer besonders bevorzugten Ausführungsform weist entweder die Abschlusskante des Lüftungskanals oder die Dichtkante der Regelklappe einen weichen Bereich auf. Die jeweils entgegengesetzte Kante weist dann einen harten Abschluss auf. Es liegt auch im Sinn der vorliegenden Erfindung, dass beispielsweise der Lüftungskanal, in welchem eine erfindungsgemäße Regelklappe eingebaut ist, wenigstens einen Anschlag aufweist, der In Wechselwirkung mit wenigstens einer Kante beziehungsweise einem Kantenbereich der erfindungsgemäßen Regelklappe in der geschlossenen Position eine vorgegebene Abdichtung des Lüftungskanals bewirken.

Die Erfindung umfasst ferner auch Luftführungseinrichtungen, mit wenigstens einem Lüfter, einem Lüftungskanal, einem Wärmetauscher für ein Kraftfahrzeug und wenigstens einer erfindungsgemäßen Regelklappe. Auch die Verwendung einer erfindungsgemäßen Regelklappe in einer Lüftungsanlage und/oder Klimaanlage eines Kraftfahrzeugs liegt im Sinn der vorliegenden Erfindung.

Die Aufgabe der vorliegenden Erfindung wird auch durch ein Verfahren zur Reduzierung von Strömungsgeräuschen eines Lüftungssystems gelöst, dass dadurch gekennzeichnet ist, dass wenigstens ein Teilbereich der an der Regelklappe vorbeiströmenden Luft in eine Vielzahl von der Hauptströmungsrichtung abweichenden Strömungsrichtungen abgelenkt wird.

Hierzu weist die erfindungsgemäße Regelklappe Strömungskörper auf, die entsprechend den vorstehenden Ausführungen angeordnet und gestaltet sind.

Nachfolgend wird die erfindungsgemäße Regelklappe anhand eines bevorzugten Ausführungsbeispieles erläutert. Es sei darauf hingewiesen, dass die hierbei dargestellte Ausführungsform nur eine mögliche Variante unter einer Vielzahl von Ausführungsformen für eine erfindungsgemäße Regelklappe ist. Dies ist insbesondere unter Berücksichtigung der eingesetzten Turbuienzgeneratoren zu sehen, wobei auch die Form und Ausgestaltung der Regelklappe selbst den Anforderungen in einem Lüftungssystem angepasst werden kann.

So zeigt
- Fig. 1: eine Seitenansicht einer erfindungsgemäßen Regelklappe;
- Fig. 2: eine Draufsicht auf die erfindungsgemäße Regelklappe nach Fig. 1;
- Fig. 3: eine schematisierte perspektivische Ansicht einer erfindungsgemäßen Regelklappe;
- Fig. 4: ein geöffneter Teilbereich eines Lüftungssystems mit einer erfindungsgemäßen Regelklappe;
- Fig. 5: eine perspektivische Ansicht eines geöffneten Lüftungssystems mit einer erfindungsgemäßen Regelklappe;
- Fig. 6: Detailansicht aus Fig.4 der erfindungsgemäßen Regelklappe in leicht geöffneter Stellung;
- Fig. 7: Detailansicht aus Fig. 4 einer erfindungsgemäßen Regelklappe in geschlossener Stellung.

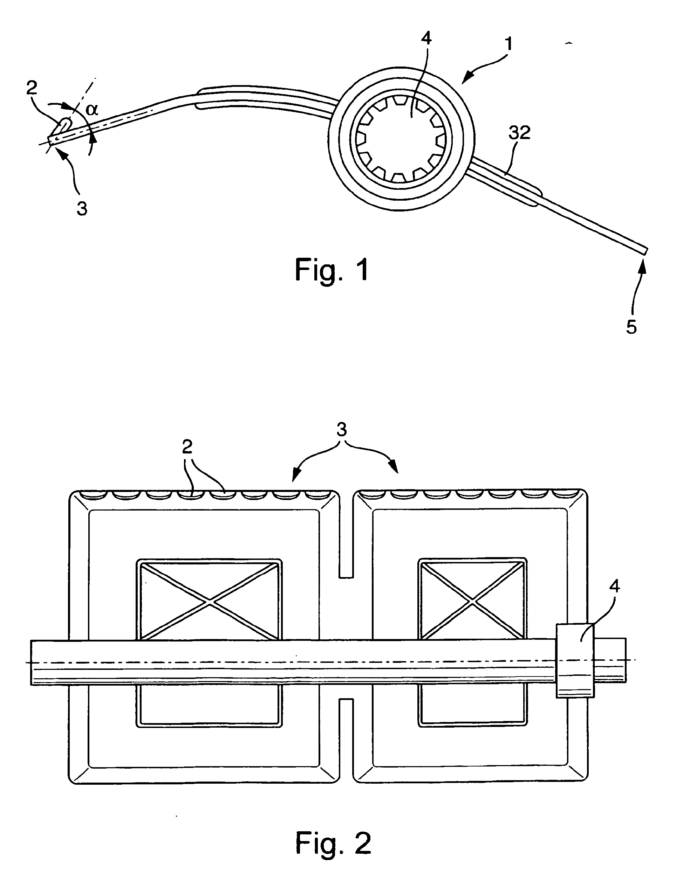

Fig. 1 ist eine Seitenansicht einer erfindungsgemäßen Regelklappe 1. Auf der linken Seite ist ein erster Kantenbereich 3 und auf der rechten Seite ein Kantenbereich 5 zu erkennen. Die im wesentlichen flächig ausgestaltete Klappe weist im Mittelbereich Erhöhungen auf, die durch die Stege 32 und im Randbereich durch die Turbulenzgeneratoren 2 hervorgerufen werden. Die Turbulenzgeneratoren sind gemäß dem hier dargestellten Ausführungsbeispiel mit einem vorgegebenen Winkel α angeordnet, der bei ca. 40° liegt.

Nicht dargestellt ist das sich verändernde Querschnittsprofil, welches sich durch unterschiedliche Schnitte in der Tiefe der Klappe gemäss der Darstellung aus Fig. 1 ergeben würde.

Die Turbulenzgeneratoren sind gemäß dem hier dargestellten Ausführungsbeispiel Noppen bzw. Zinnen, die im äußeren Bereich der umströmten Kanten der Regelklappe angeordnet sind. Hierbei ist zu beachten, dass die Turbulenzgeneratoren auf der dem Luftstrom zugewandten Seite sich verjüngen und die Luftführung somit über die Noppen und den dazwischen gebildeten Engstellen den Luftstrahl in eine Vielzahl von kleineren Luftströmungen aufteilen, die von den darüber liegenden Bereichen des Luftstroms abgelenkt werden.

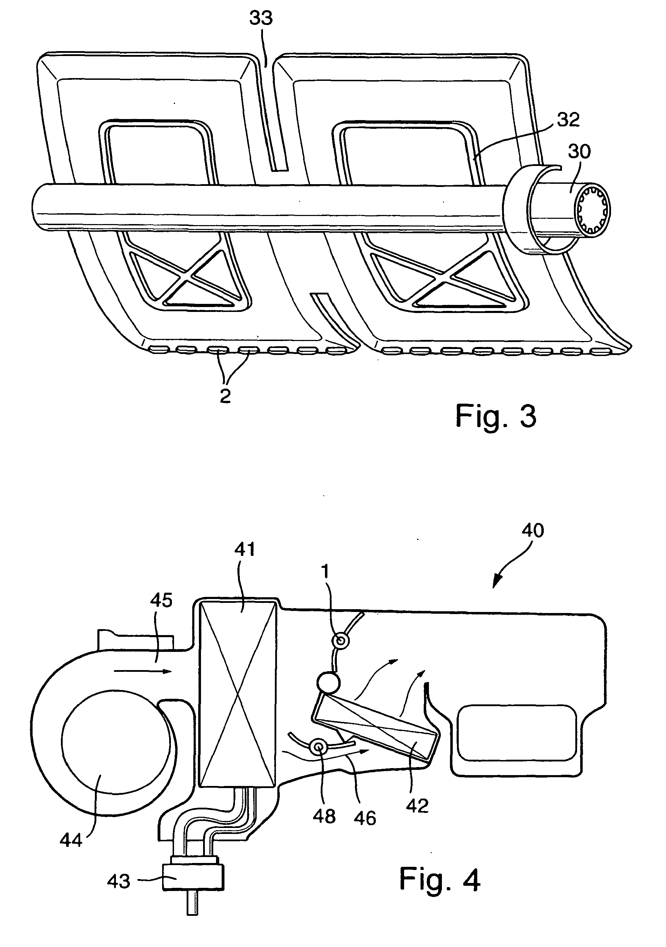

In Fig. 3 ist der Aufbau einer erfindungsgemäßen Regelklappe anhand einer schematisierten perspektivischen Ansicht dargestellt. Neben dem Kupplungsbereich 30 sind die Verstärkungsstege 32 und die Aussparungen zwischen den einzelnen Klappen 33 zu erkennen. Auch die Turbulenzgeneratoren 2 sind auf der unteren Seite der Klappe zu erkennen.

Fig. 4 zeigt die Anordnung einer erfindungsgemäßen Regelklappe in einem geöffneten Lüftungssystem. Hierbei weist das Lüftungssystem einen Lüfter 44, einen Strömungskanal 45 und einen Wärmetauscher 41 auf. Der Wärmetauscher wird über die Versorgungsleitungen 43 mit einem Kühlmittel beaufschlagt. Die Luft strömt durch den Wärmetauscher hindurch, und wird gemäß der hier dargestellten Schaltposition der Klappen 1 und 48 durch einen nachgeschalteten zweiten Wärmetauscher 42 in einen Ableitabschnitt des Lüftungssystems 40 geleitet. Hierzu Ist die Regelklappe 48 geöffnet und die Regelklappe 1 geschlossen. Der Vollständigkeit halber sei angemerkt, dass sich an den äußeren Begrenzungen des Lüftungssystems beziehungsweise der Strömungskanäle Seitenwände erstrecken, die durch einen entsprechend geformten Aufsatz geschlossen werden.

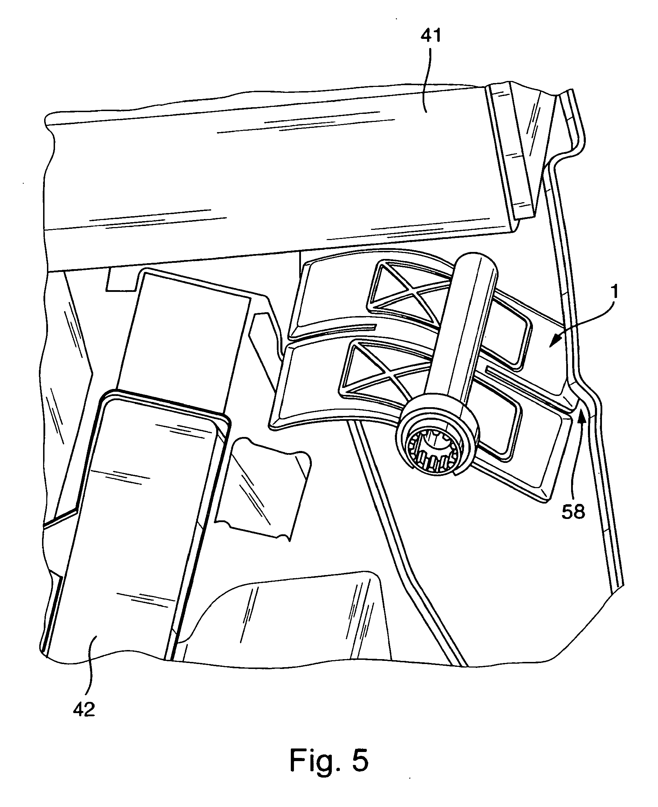

Fig. 5 zeigt eine perspektivische Darstellung der erfindungsgemäßen Regelklappe in dem Lüftungssystem gemäß Fig. 4. Hierbei sind die Wärmetauscher 41 und 42 zu erkennen, wobei die Anordnung der erfindungsgemäßen Regelklappe so gestaltet ist, dass diese in der geschlossenen Stellung an der Wandung des Strömungskanals 48 anliegt. Hierdurch wird insbesondere eine Abstützung der Regelklappe im geschlossenen Zustand erreicht, wodurch eine verbesserte Abdichtung bewirkt wird.

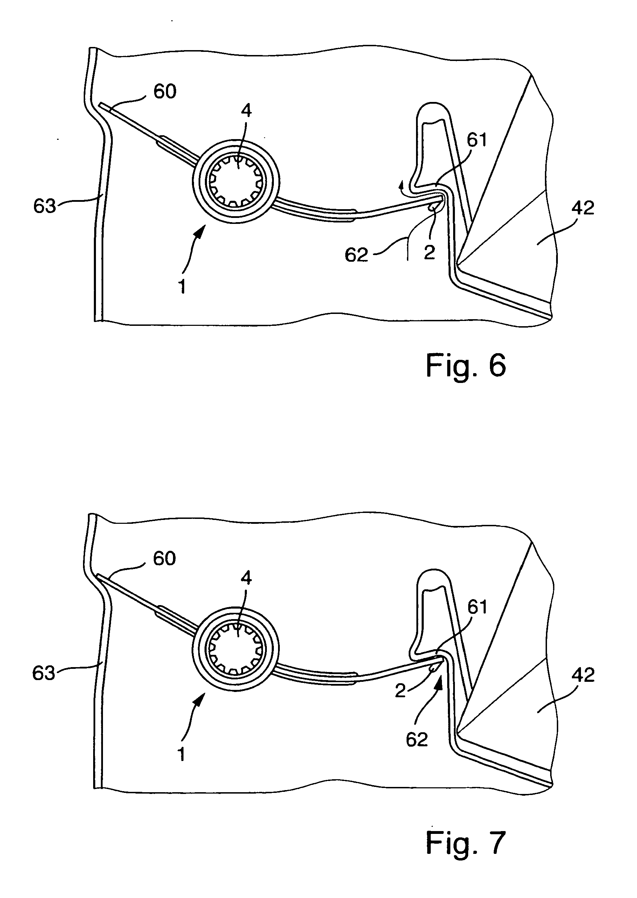

Die Fig. 6 zeigt die Regelklappe gemäß Fig. 4 in der Draufsicht. Die Regelklappe ist leicht geöffnet, so dass der Luftstrom 62 über die umströmte Kante 3 in den nachfolgenden Abschnitt des Strömungskanals geleitet wird. Insbesondere in einer solchen Position bewirkt die erfindungsgemäße Regelklappe, dass der Luftstrom 62 durch die Turbulenzgeneratoren im umströmten Kantenbereich der Regelklappe zerteilt wird, so dass insbesondere größere Strömungsstrukturen durch den Turbulenzkörper zerteilt werden und von der Hauptströmungsrichtung abgelenkt werden.

Ferner bewirken die Turbulenzgeneratoren, dass die umströmte Kante 3 der Regelklappe versteift wird, was zusätzlich einen positiven Effekt für mögliche akustische Effekte hat. Insbesondere können hierdurch Schwingungen im Endbereich der Regelklappe reduziert werden.

Fig. 7 zeigt die ertindungsgemäße Regelklappe im geschossenen Zustand. Hierbei liegt die Regelklappe an dem Vorsprung der Seitenwandung des Lüftungskanals sowohl rechts- als auch linksseitig an.

## Patentansprüche

1. Vorrichtung zum Belüften einer Fahrgastkabine insbesondere eines Kraftfahrzeugs, mit wenigstens einer Regelklappe (1,48) mit wenigstens einer in Hauptströmungsrichtung von Luft überströmten Kante (3), welche von wenigstens einer ersten in wenigstens eine zweite Position bewegbar ist, wobei die im wesentlichen flächig ausgeführte Klappe, insbesondere im Bereich der überströmten Kante (3), ein unregelmäßiges Querschnittsprofil (3) aufweist, welches wenigstens die die Kante in der Hauptströmungsrichtung überströmende Luft wenigstens zum Teil in eine Vielzahl von der Hauptströmungsrichtung abweichende Strömungsrichtungen ablenkt, wobei die Regelklappe im überströmten Kantenbereich Querschnittsüberhöhungen aufweist,
**dadurch gekennzeichnet, dass** diese durch Strömungskörper gebildet werden

2. Vorrichtung nach wenigstens einem der vorstehenden Ansprüche, **dadurch gekennzeichnet, dass**
die Strömungskörper aus einer Gruppe von Strukturen ausgewählt werden, welche Turbulenzgeneratoren, Zinnen, Kalotten, Kugelkalotten, Noppen, Pyramiden, Verzahnungen, Gitter, Gitterabschnitte, Zylinder, Kombinationen hieraus aufweist.

3. Vorrichtung nach wenigstens einem der vorstehenden Ansprüche, **dadurch gekennzeichnet, dass**
die Strömungskörper in einem vorgegebenen Winkel α in bezug auf den überströmten Kantenbereich angeordnet sind, welcher zwischen 25 °und 90 °, vorzugsweise zwischen 45° und 60° beträgt.

4. Vorrichtung nach wenigstens einem der vorstehenden Ansprüche, **dadurch gekennzeichnet, dass**
die Regelklappe ein integrales Spritzgussteil ist.

5. Vorrichtung nach wenigstens einem der vorstehenden Ansprüche, **dadurch gekennzeichnet, dass**
die Regelklappe insbesondere die überströmte Kante zumindest in einem Teilbereich eine Dichtkante aufweist.

6. Vorrichtung nach wenigstens einem der vorstehenden Ansprüche, **dadurch gekennzeichnet, dass**
die Regelklappe Verstärkungsstege (32) aufweist

7. Vorrichtung nach wenigstens einem der vorstehenden Ansprüche, **dadurch gekennzeichnet, dass**
mindestens zwei Regelklappen, insbesondere nebeneinander auf einer Drehachse angeordnet sind.

8. Vorrichtung nach Anspruch 7, **dadurch gekennzeichnet, dass**
zwischen Regelklappen Ausnehmungen (33) vorgesehen sind, die sich von wenigstens einer äußeren Kante mit einer vorgegebenen Länge in Richtung auf die Rotationsachse erstrecken.

9. Vorrichtung nach wenigstens einem der vorstehenden Ansprüche, **dadurch gekennzeichnet, dass**
die Regelklappe wenigstens eine Drehachse (4) aufweist, an deren Endbereich wenigstens eine Kupplungsvorrichtung (30) vorgesehen ist.

10. Luftführungseinrichtung mit wenigstens einem Lüfter, wenigstens einem Lüftungskanal, wenigstens einem Wärmetauscher und wenigstens einer Vorrichtung gemäß wenigstens einem der vorstehenden Ansprüche, wobei die wenigstens eine Regelklappe in dem Lüftungskanal angeordnet ist.

11. Verfahren zur Steuerung und/oder Regelung des Strömungswegs und/oder des Volumenstroms in einer Lüftungsanlage und/oder Klimaanlage eines Kraftfahrzeuges **dadurch gekennzeichnet, dass** der Strömungsweg und/oder der Volumenstrom mittels wenigstens einer Vorrichtung gemäß wenigstens einem der vorstehenden Ansprüche gesteuert oder geregelt wird.

12. Verfahren zur Reduzierung von Strömungsgeräuschen eines Lüftungssystems, insbesondere von Strömungsgeräuschen an einer Regelklappe vorzugsweise in einem Kraftfahrzeug, **dadurch gekennzeichnet, dass**
die Luft, welche in einer Hauptströmungsrichtung über wenigstens eine Regelklappe einer Vorrichtung nach einem der Ansprüche 1 bis 9 , insbesondere über wenigstens eine Kante der Regelklappe strömt, wenigstens zum Teil in eine Vielzahl, von der Hauptströmungsrichtung abweichende Strömungsrichtungen ablenkt wird.

13. Verfahren zur Herstellung einer Regelklappe einer Vorrichtung nach wenigstens einem der Ansprüche 1 bis 9, **dadurch gekennzeichnet, dass** das unregelmäßige Profil der überströmten Kante in Form von Querschnittsüberhöhungen durch Überspritzung wenigstens eines Kantenbereichs der Regelklappe erzeugt wird.

## Claims

1. Device for the ventilation of a passenger cabin in particular of an automobile, with at least one control valve (1, 48) with at least one edge (3) overflowed with air in the main flow direction that can be moved from at least a first into a second position, wherein the mainly two-dimensional valve, in particular in the area of the overflowed edge (3), has a changing cross-sectional profile (3), which diverts at least part of the air flowing over the edge in the main flow direction into a number of stream directions deviating from the main flow direction, wherein the control valve has cross-sectional super-elevations in the overflowed edge area, **characterized in that** these are designed as flow bodies.

2. Device according to any of the preceding claims, **characterized in that** the flow bodies are selected from a group of structures, which contains turbulence generators, pinnacles, calottes, spherical calottes, nubs, pyramids, indentations, gratings, grating sections, cylinders, combinations thereof.

3. Device according to at least one of the preceding claims, **characterized in that** the flow bodies are arranged at a predetermined angle α in relation to the overflowing edge area, which is between 25° and 90°, preferably between 45° and 60°.

4. Device according to at least one of the preceding claims, **characterized in that** the control valve is an integral injection-molding part.

5. Device according to at least one of the preceding claims, **characterized in that** the control valve, in particular the overflowed edge, has a sealing edge in at least one sub area.

6. Device according to at least one of the preceding claims, **characterized in that** the control valve has reinforcing ligaments (32).

7. Device according to at least one of the preceding claims, **characterized in that** at least two control valves arc arranged next to each other on a rotation axis.

8. Device according to claim 7, **characterized in that** recesses (33) that extend from at least one outer edge with a predetermined length in the direction of the rotation axis are provided between control valves.

9. Device according to at least one of the preceding claims, **characterized in that** the control valve has at least one rotation axis (4), the end area of which is provided with at least one coupling device (30).

10. Air-flow routing device with at least one fan, at least one air duct, at least one heat exchanger, and at least one control valve according to at least one of the preceding claims, whereby at least one control valve is arranged in the ventilation channel.

11. Procedure for the control and/or regulation of the flow path and/or volume flow in a ventilation system and/or air-conditioning system of an automobile **characterized in that**, the flow path and/or volume flow is controlled or regulated with a device according to at least one of the preceding claims.

12. Procedure for the reduction of flow noises in a ventilation system, in particular the reduction of flow noises from a control valve preferably in an automobile, **characterized in that** the air, which flows in a main flow direction over the control valve according to any of the claims 1 to 9, in particular over at least one edge of the control valve, is partially diverted into a number of flow directions deviating from the main flow direction.

13. Procedure for the production of a control valve according to at least one of the claims 1 to 9, **characterized in that** the cross-sectional change of the overflowed edge is created by coating at least one edge area of the control valve.

## Revendications

1. Dispositif de ventilation d'un habitacle, en particulier d'un véhicule automobile, comprenant au moins un volet de régulation (1, 48) comportant au moins un bord (3) submergé d'air dans la direction principale d'écoulement, volet de régulation qui peut être déplacé, passant d'au moins une première position dans au moins une deuxième position, où le volet, réalisé sensiblement de façon aplatie, présente, en particulier dans la zone du bord submergé (3), un profil en travers (3) de forme irrégulière qui dévie au moins l'air submergeant le bord dans la direction principale d'écoulement, au moins en partie en une multiplicité de directions d'écoulement s'écartant de la direction principale d'écoulement, où le volet de régulation présente, dans la zone du bord submergé, des surélévations en travers, **caractérisé en ce que** celles-ci sont formées par des corps d'écoulement.

2. Dispositif selon la revendication précédente, **caractérisé en ce que** les corps d'écoulement sont sélectionnés parmi un groupe de structures qui présente des générateurs de turbulences, des créneaux, des calottes, des calottes sphériques, des tétons, des pyramides, des dentures, des grilles, des parties de grilles, des cylindres, des combinaisons de ces structures.

3. Dispositif selon au moins l'une ou l'autre des revendications précédentes, **caractérisé en ce que** les corps d'écoulement sont disposés suivant un angle α prédéfini par rapport à la zone du bord submergé, angle qui est compris entre 25° et 90°, de préférence entre 45° et 60°.

4. Dispositif selon au moins l'une quelconque des revendications précédentes, **caractérisé en ce que** le volet de régulation est une pièce monobloc moulée par injection.

5. Dispositif selon au moins l'une quelconque des revendications précédentes, **caractérisé en ce que** le volet de régulation, en particulier le bord submergé, présente un bord d'étanchéité au moins dans une zone partielle.

6. Dispositif selon au moins l'une quelconque des revendications précédentes, **caractérisé en ce que** le volet de régulation présente des renforts (32).

7. Dispositif selon au moins l'une quelconque des revendications précédentes, **caractérisé en ce qu'**au moins deux volets de régulation sont disposés sur un axe de rotation en étant en particulier l'un à côté de l'autre.

8. Dispositif selon la revendication 7, **caractérisé en ce qu'**il est prévu, entre les volets de régulation, des évidements (33) qui, à partir d'au moins un bord extérieur, s'étendent en direction de l'axe de rotation en ayant une longueur prédéfinie.

9. Dispositif selon au moins l'une quelconque des revendications précédentes, **caractérisé en ce que** le volet de régulation présente au moins un axe de rotation (4) sur la zone d'extrémité duquel il est prévu au moins un dispositif d'accouplement (30).

10. Dispositif de passage d'air comprenant au moins un ventilateur, au moins un conduit de ventilation, au moins un échangeur de chaleur et au moins un dispositif conformément à au moins l'une quelconque des revendications précédentes, où le volet de régulation au moins au nombre de un est disposé dans le conduit de ventilation.

11. Procédé de commande et / ou de régulation de la trajectoire d'écoulement et / ou du débit volumétrique dans un système de ventilation et / ou un système de climatisation d'un véhicule automobile, **caractérisé en ce que** la trajectoire d'écoulement et /ou le débit volumétrique est commandé(e) ou régulé(e) au moyen au moins d'un dispositif conformément au moins à l'une quelconque des revendications précédentes.

12. Procédé de diminution des bruits d'écoulement d'un système de ventilation, en particulier des bruits d'écoulement au niveau d'un volet de régulation, de préférence dans un véhicule automobile, **caractérisé en ce que** l'air qui s'écoule dans une direction principale d'écoulement via au moins un volet de régulation d'un dispositif selon l'une quelconque des revendications 1 à 9, en particulier via au moins un bord du volet de régulation, est dévié, au moins en partie, en une multiplicité de directions d'écoulement s'écartant de la direction principale d'écoulement.

13. Procédé de fabrication d'un volet de régulation d'un dispositif selon au moins l'une quelconque des revendications 1 à 9, **caractérisé en ce que** le profil de forme irrégulière du bord submergé est produit sous la forme de surélévations en travers obtenues en appliquant une plus grande charge d'injection sur au moins une zone du bord du volet de régulation.
